# DEMANDE DE BREVET EUROPEEN

(11) **EP 4 837 761 A1**
(43) Date de publication de la demande: **11.11.2026**
(21) Numéro de dépôt: 26171060.2
(22) Date de dépôt: 07.04.2026
(51) Int. Cl.: B60K 1/04

(54) **DISPOSITIF DE PROTECTION DES ORGANES DE CONNEXION D'UN COMPOSANT À HAUTE TENSION COUPLÉ À UN MOTEUR ÉLECTRIQUE DE VÉHICULE AUTOMOBILE**

(30) Priorité: 05.05.2025 FR 2504740
(71) Demandeur: Stellantis Auto SAS, 78300 Poissy (FR)
(72) Inventeur: CASTELLI, BRUNO, 92300 LEVALLOIS PERRET (FR); DAUBANNAY, ALEXANDRE, 92260 FONTENAY AUX ROSES (FR); MARQUES, JEAN PIERRE, 91330 YERRES (FR)
(74) Mandataire: PSIP

(57) **Abrégé**

L'invention concerne un dispositif de protection, dans le bloc avant (B) d'un véhicule automobile, des organes (31, 32) destinés à la connexion, d'une part, à une batterie de traction et, d'autre part, à un composant sensible (2) à haute tension raccordé à un moteur électrique (M) et monté sur une traverse de bloc avant (1) dans laquelle est ménagée une cavité (10) assurant son logement, caractérisé en ce qu'il comprend un bouclier intégré (11) qui est réalisé d'une seule pièce avec ladite traverse de bloc avant (1) de façon à protéger les organes de connexion (31, 32) lors d'un choc contre le véhicule.

## Description

L'invention concerne, de façon générale, le domaine de la structure des véhicules automobiles et s'intéresse, plus particulièrement, à un dispositif destiné à protéger les organes de connexion d'un composant à haute tension associé à un moteur électrique lors d'un choc contre le véhicule.

Aujourd'hui, la partie avant, ou bloc avant, de la structure des véhicules à motorisation électrique (hybrides ou tout électrique) intègre un ensemble comprenant, notamment, le moteur, des composants électriques périphériques ainsi qu'un système de climatisation.

Certaines motorisations électriques nécessitent un élément de support sous forme d'une traverse destinée à assurer son calage vertical et horizontal dans le bloc avant. Cette traverse est généralement montée entre les deux brancards latéraux.

Une telle traverse porte parfois des composants électriques sensibles qui sont couplés au moteur. A cet effet, la traverse est alors pourvue de cavités ou de poches destinées à loger et à protéger ces composants. En particulier, l'un des composants les plus sensibles, notamment, un onduleur (dénommé aussi « inverter ») est destiné à assurer la liaison électrique entre la batterie de traction et le moteur électrique, via un faisceau de câbles à haute tension de calibres appropriés et un connecteur dédié. Les câbles et le connecteur sont ainsi des organes de connexion essentiels pour assurer le transfert de l'énergie électrique des batteries jusqu'au moteur ainsi qu'à divers autres composants.

Il s'est avéré toutefois que, lors d'un choc, en particulier dans la zone arrière du véhicule, ces organes de connexion électrique sont exposés à un fort impact ce qui entraîne des risques de dysfonctionnement du moteur et, soulève plus généralement, des problèmes de sécurité.

Par conséquent, afin de minimiser ces risques, il est actuellement prévu de rapporter un capot de protection destiné à recouvrir la zone dans laquelle sont situés les câbles et leur connectique respective.

Toutefois, le montage de ce capot est effectué tardivement au cours des ultimes étapes d'intégration de la motorisation et s'avère laborieux compte tenu du faible espace résiduel résultant de l'encombrement du bloc avant, à ce stade déjà avancé des opérations d'assemblage.

En outre, en cas de choc et malgré la présence de ce capot, les organes de connexion présentent un risque d'exposition à l'impact du fait de la séparation ou de la détérioration du capot.

Il existe déjà des dispositifs conçus pour la protection des composants électriques et/ou des organes de connexion qui sont embarqués dans les véhicules automobiles.

Ainsi, le brevet EP2782774 décrit un dispositif destiné à la protection des connecteurs électriques à haute tension d'un module d'électronique de puissance embarqué dans un véhicule automobile à motorisation électrique qui est logé dans un carter. Ce dispositif comprend une pièce en tôle d'acier qui recouvre partiellement les connecteurs et qui, lors d'un choc, vient en appui contre le carter du module en protégeant ainsi ces organes.

Le brevet FR2987807 décrit un autre dispositif destiné à améliorer l'aérodynamisme des véhicules automobiles à motorisation électrique ou hybride. Ce dispositif est installé sous la partie centrale du véhicule où il protège les batteries de traction et leurs connexions électriques vis-à-vis d'éventuelles projections venant de la route.

Cependant, ces dispositifs de de protection utilisent toujours des pièces rapportées qui sont difficiles à positionner et à fixer dans le bloc avant et ils ne sont donc pas satisfaisants du fait de leur manque d'intégration dans l'environnement du moteur.

Dans ce contexte, l'invention s'est donc intéressée à la recherche d'une solution technique innovante destinée à protéger les organes de connexion électrique en cas de choc du véhicule contre un obstacle tout en s'affranchissant des pièces rapportées utilisées par les dispositifs traditionnels.

Ce but est atteint, selon l'invention, au moyen d'un dispositif de protection, dans le bloc avant d'un véhicule automobile, des organes assurant la connexion, d'une part, à une batterie de traction et, d'autre part, à un composant sensible à haute tension raccordé à un moteur électrique et monté sur une traverse de bloc avant dans laquelle est ménagée une cavité assurant son logement, caractérisé en ce qu'il comprend un bouclier intégré réalisé d'une seule pièce avec ladite traverse de bloc avant de façon à protéger les organes de connexion lors d'un choc contre le véhicule.

Selon une caractéristique avantageuse du dispositif de protection de l'invention, le bouclier est constitué d'une paroi qui fait saillie par rapport à la traverse de bloc avant en délimitant un espace intercalaire qui prolonge ladite cavité vers l'extérieur.

Selon un mode de réalisation préférentiel du dispositif de l'invention, l'espace intercalaire débouche de part et d'autre de la paroi à la manière d'un conduit.

De préférence, la paroi formant le bouclier est pourvue d'une fenêtre permettant la visualisation des organes de connexion.

Selon une variante spécifique de réalisation du dispositif de l'invention, la traverse de bloc avant et le bouclier sont réalisés sous forme monobloc par moulage dans une presse à injection.

Selon une autre variante de réalisation de l'invention, le bouclier porte une interface destinée à fixer au moins une partie des organes de connexion.

Un autre objet de l'invention est une traverse de bloc avant de véhicule automobile électrique comprenant une cavité ménagée sur sa face supérieure pour le logement d'un composant sensible et un dispositif de protection tel que défini ci-dessus pour la protection des organes de connexion dudit composant.

Encore un autre objet de l'invention est un véhicule automobile à motorisation électrique dont la structure comprend une traverse de bloc avant présentant les caractéristiques mentionnées ci-dessus.

Grâce à l'invention, en cas de choc arrière, les organes de connexion (câbles et connecteur) du composant électrique sensible à haute tension, qui est porté par la traverse de bloc avant, sont protégés de l'impact par le bouclier solidaire de cette même traverse. L'intégrité de ces organes est ainsi préservée de sorte que la sécurité et le bon fonctionnement du véhicule sont garantis.

En outre, l'invention permet de faciliter le branchement des câbles sur le connecteur du composant à haute tension et d'effectuer un contrôle visuel de l'assemblage ce qui améliore les opérations de maintenance du véhicule.

En outre, le bouclier, tout en évitant un écrasement des organes de connexion, apporte conjointement, par son intégration à la traverse de bloc avant, une rigidification du bloc avant du véhicule.

L'invention permet de répondre au besoin d'intégration de nouvelles motorisations électriques, sans remettre en cause la globalité de la structure du bloc avant existante du fait de l'absence de pièces rapportées. L'invention est donc sans impact sur l'ensemble des silhouettes destinées à utiliser ces nouvelles motorisations.

Le bloc avant comprenant le dispositif de protection de l'invention contribue à l'optimisation de la compacité de la structure du véhicule dans un contexte où l'environnement de la motorisation électrique est de dimensions de plus en plus réduites tout en respectant les exigences règlementaires en matière de sécurité.

D'autres caractéristiques et avantages de l'invention ressortiront à la lecture de la description qui va suivre, en référence aux figures annexées, pour lesquelles :

[Fig. 1] est une vue partielle en perspective d'un bloc avant de véhicule automobile à motorisation électrique comprenant une traverse de bloc avant pourvue d'un mode de réalisation préférentiel du dispositif de protection des organes de connexion selon l'invention.

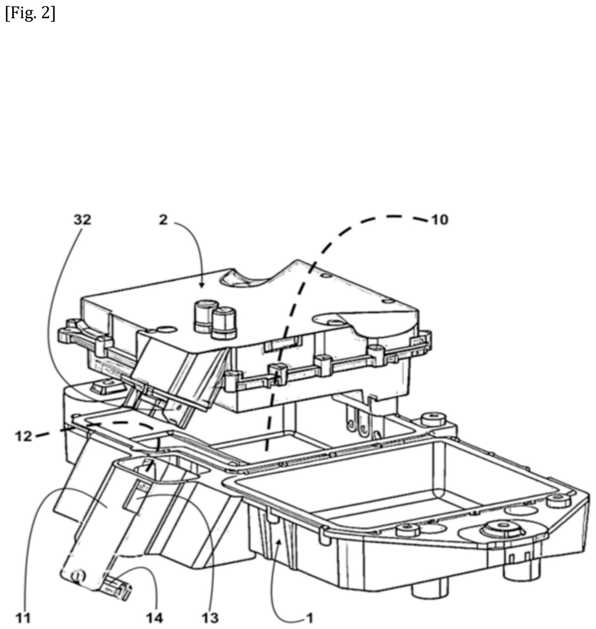

[Fig. 2] est une vue en perspective éclatée d'une traverse de bloc avant intégrant le dispositif de protection de l'invention et portant un composant sensible à haute tension équipé de son connecteur (sans les câbles).

[Fig. 3] est une vue de détail en perspective de dessous de la traverse de bloc avant de l'invention portant le composant à haute tension et pourvue d'un dispositif de protection des organes de connexion selon l'invention.

Pour plus de clarté, les éléments identiques ou similaires sont repérés par des signes de référence identiques sur l'ensemble de la description et des figures.

Naturellement, le dispositif de protection de l'invention dont un mode de réalisation est illustré schématiquement par les figures présentées ci-dessus et décrit ci-après, n'est donné qu'à titre d'exemple non limitatif. Il est explicitement prévu dans le cadre de l'invention que l'on puisse proposer et combiner entre eux différents modes pour en proposer d'autres.

L'invention concerne le domaine général de la structure des véhicules automobiles et s'intéresse, plus particulièrement, à un perfectionnement des éléments constitutifs du bloc avant.

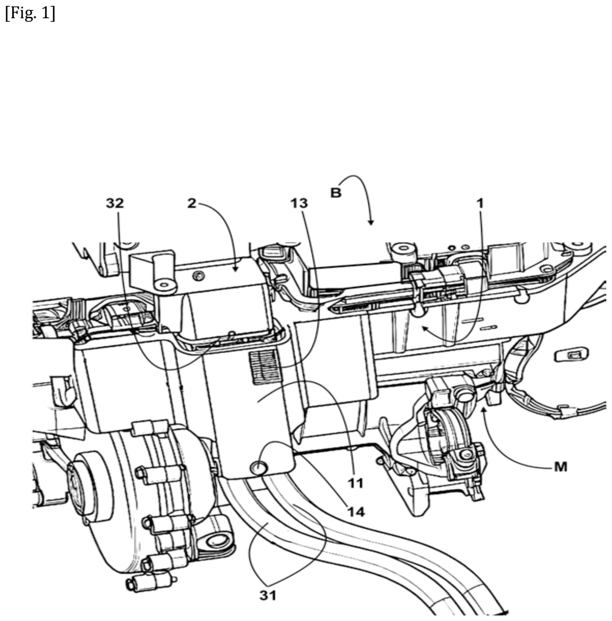

Comme illustré par la figure 1, le bloc avant B d'un véhicule automobile est équipé d'un moteur électrique M supporté par une traverse de bloc avant 1. Cette traverse de bloc avant 1 est pourvue d'au moins une cavité 10 dans laquelle est logé un ou plusieurs composants électriques sensibles à haute tension, dont ici un onduleur 2 (ou « inverter »). Ce composant 2 est relié électriquement en amont à une batterie de traction (non représentée) via des organes de connexion comprenant, notamment, un faisceau de câbles 31 et un connecteur 32. En aval, l'onduleur 2 est relié électriquement au moteur M.

L'invention propose un perfectionnement des moyens assurant la protection des organes de connexion 31, 32 en amont du composant 2. En effet, jusqu'à présent, ces moyens de protection étaient constitués de capots rapportés et fixés manuellement sur la traverse de bloc avant mais dont le montage s'est avéré laborieux.

En outre, lors d'un choc à l'arrière du véhicule, ces capots qui étaient fortement impactés, subissaient des déformations, voire une désolidarisation, entraînant alors des atteintes préjudiciables aux organes de connexion à haute tension. Or, de tels dommages sont inacceptables du point de vue de la sécurité du véhicule.

Dans le but de surmonter cette problématique, l'invention consiste à prévoir un bouclier intégré 11, réalisé d'une seule pièce avec la traverse de bloc avant 1, de façon à protéger les organes de connexion 31, 32 lors d'un choc contre le véhicule.

Selon une variante spécifique de réalisation du dispositif de l'invention, la traverse de bloc avant 1 et le bouclier 11 sont réalisés sous forme monobloc par une opération de moulage dans une presse à injection.

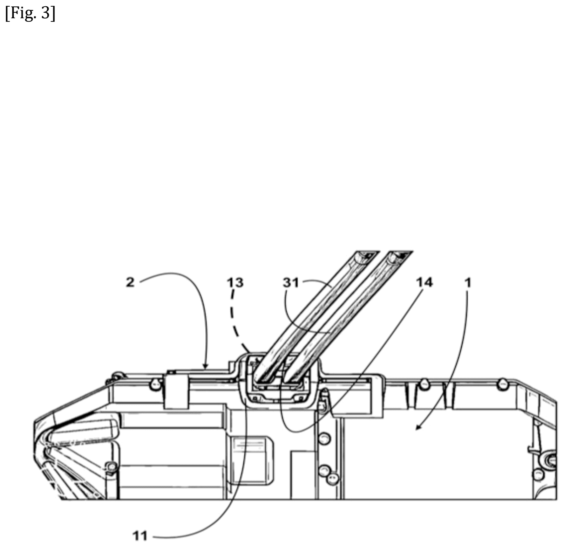

Ce bouclier est, de préférence, constitué d'une paroi qui fait saillie par rapport à la traverse de bloc avant 1 en formant extérieurement une excroissance et en délimitant intérieurement un espace intercalaire qui prolonge la cavité 10 vers l'extérieur. Cet espace intercalaire 12 débouche de part et d'autre de la paroi du bouclier 11 à la manière d'un conduit (ou d'une gaine) dans lequel est logé le faisceau de câbles 31 et, en partie haute, au moins une partie du connecteur 32 de l'onduleur 2, comme illustré par les figures 1 et 3.

De préférence, la paroi formant le bouclier 11 est pourvue d'une fenêtre 13 permettant la visualisation des organes de connexion 31, 32 en vue d'assurer le contrôle du branchement des câbles 31 au connecteur 32 et leur état.

Selon une autre variante de réalisation, l'invention prévoit une interface destinée à fixer le faisceau de câbles 31 provenant de la batterie de traction. Cette interface, formée par exemple d'une patte 14 ou d'un collier, permet également d'assurer un point de fixation pour la boucle dynamique du faisceau qui assure la liaison entre la batterie de traction, qui est fixe, et le moteur M qui subit des débattements.

## Revendications

1. Dispositif de protection, dans le bloc avant (B) d'un véhicule automobile, des organes (31, 32) destinés à la connexion, d'une part, à une batterie de traction et, d'autre part, à un composant sensible (2) à haute tension raccordé à un moteur électrique (M) et monté sur une traverse de bloc avant (1) dans laquelle est ménagée une cavité (10) assurant son logement, **caractérisé en ce qu'**il comprend un bouclier intégré (11) qui est réalisé d'une seule pièce avec ladite traverse de bloc avant (1) de façon à protéger les organes de connexion (31, 32) lors d'un choc contre le véhicule.

2. Dispositif selon la revendication 1, **caractérisé en ce que** ledit bouclier (11) est constitué d'une paroi qui fait saillie par rapport à la traverse de bloc avant (1) en délimitant un espace intercalaire (12) prolongeant ladite cavité (10) vers l'extérieur.

3. Dispositif selon la revendication précédente, **caractérisé en ce que** ledit espace intercalaire (12) débouche de part et d'autre de la paroi à la manière d'un conduit.

4. Dispositif selon l'une des revendications précédentes, **caractérisé en ce que** ledit bouclier (11) est pourvu d'une fenêtre (13) permettant la visualisation des organes de connexion (31, 32).

5. Dispositif selon l'une des revendications précédentes, **caractérisé en ce que** la traverse de bloc avant (1) et le bouclier (11) sont réalisés sous forme monobloc par moulage dans une presse à injection.

6. Dispositif selon l'une des revendications précédentes, **caractérisé en ce que** le bouclier porte une interface (14) destinée à fixer au moins au moins une partie (31) des organes de connexion.

7. Traverse de bloc avant (1) de véhicule automobile électrique comprenant une cavité ménagée sur sa face supérieure pour le logement d'un composant sensible et un dispositif de protection selon l'une des revendications précédentes pour la protection des organes de connexion dudit composant.

8. Véhicule automobile à motorisation électrique dont la structure comprend une traverse de bloc avant (1) selon la revendication précédente.
